# FASCICULE DE BREVET EUROPEEN

(11) **EP 1 449 690 B1**
(45) Date de publication et mention de la délivrance du brevet: **01.02.2006**
(21) Numéro de dépôt: 04362003.8
(22) Date de dépôt: 12.02.2004
(51) Int. Cl.: B60H 1/00

(54) **Dispositif de ventilation et de climatisation de véhicule**
Belüftungs- und Klimaanlage für ein Kraftfahrzeug
Ventilating and air-conditioning device for a vehicle

(30) Priorité: 18.02.2003 FR 0301943
(43) Date de publication de la demande: 25.08.2004
(73) Titulaire: Hispacold France, 33522 Bruges Cédex (FR)
(72) Inventeur: Charnavel, Alain, 33320 Le Taillan Medoc (FR); Nieddu, Giovanni, 33700 Merignac (FR)
(74) Mandataire: Thébault, Jean-Louis

(56) Documents cités:
- EP-A- 0 613 796
- DE-C- 4 340 587
- FR-A- 2 821 021
- US-A- 3 603 238

## Description

La présente invention se rapporte aux dispositifs de ventilation et de climatisation de véhicules tels que véhicules de transport en commun.

De tels dispositifs sont connus par exemple de la demande de brevet FR 2 825 325 au nom de la demanderesse relative à un dispositif s'intégrant dans un pavillon de véhicule et faisant passer de l'air extérieur dans un évaporateur annulaire de climatiseur sous l'action d'une turbine, l'air refroidi étant diffusé à l'intérieur de l'habitacle par un diffuseur.

Le document DE 40 37 133 pour sa part concerne un dispositif de ventilation et de climatisation pour lequel une prise d'air centrale dans l'habitacle coaxiale à une prise d'air extérieur sont entourées d'une turbine annulaire soufflant l'air au travers d'un évaporateur annulaire vers des ouvertures de diffusion à l'intérieur de l'habitacle.

Le document FR 2 821 021 concerne un dispositif de ventilation et de climatisation selon le préambule de la revendication 1.

La présente invention a pour but de perfectionner les dispositifs de ventilation et de climatisation avec mélangeurs notamment pour véhicules et notamment de réaliser un dispositif offrant un filtrage et un refroidissement efficaces de l'air tout en permettant un mélange d'air extérieur et d'air intérieur.

Pour cela l'invention concerne principalement un dispositif de ventilation et de climatisation tel que defini dans la revendication une.

De manière particulièrement avantageuse, la cloison peut comporter un rebord périphérique, en appui contre une face interne de l'évaporateur, s'opposant à la sortie de l'air sur au moins une partie de la face interne de l'évaporateur.

En mode de réalisation particulier, le filtre est un filtre annulaire.

Le filtre peut notamment être disposé dans l'espace délimité entre le toit et le faux-plafond, et être disposé sur une plaque support solidaire d'au moins une partie du diffuseur, le démontage du filtre étant réalisé par le démontage du diffuseur et son extraction par le bas du faux-plafond du véhicule.

Le dispositif de ventilation et de climatisation peut en particulier être tel que l'évaporateur est disposé dans un flasque prolongeant vers le haut une casserole de support de la turbine, la casserole comprenant des trous de passage pour l'air venant du filtre. Plus particulièrement, une couronne annulaire de récupération d'eau de condensation peut être intercalée entre l'évaporateur et le flasque, la couronne évacuant l'eau de condensation à l'extérieur du véhicule par des trous dans le flasque.

Notamment, le dispositif peut être tel que l'air entre dans une partie inférieure de la casserole, est dirigé dans une direction radiale centrifuge vers l'évaporateur par la cloison de séparation, est contenu dans le volume de l'évaporateur par un rebord prolongeant verticalement la cloison et s'échappe au dessus dudit rebord vers la turbine selon une direction radiale centripète sous l'action de l'aspiration de la turbine.

De manière avantageuse, une partie du dispositif comprenant le flasque et l'évaporateur est disposée au dessus du toit du véhicule et recouverte d'une cloche de confinement, un joint d'étanchéité annulaire étant disposé entre un rebord extérieur du flasque et la cloche de confinement.

Le dispositif peut être notamment fixé au toit par le flasque, la casserole étant située dans l'espace entre le toit et le faux-plafond, le diffuseur éventuellement central faisant saillie au dessous du plafond.

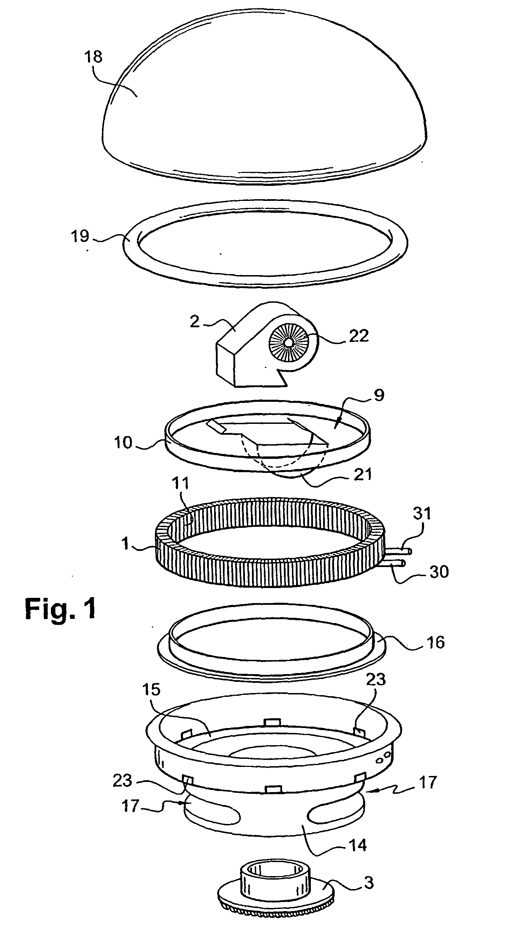

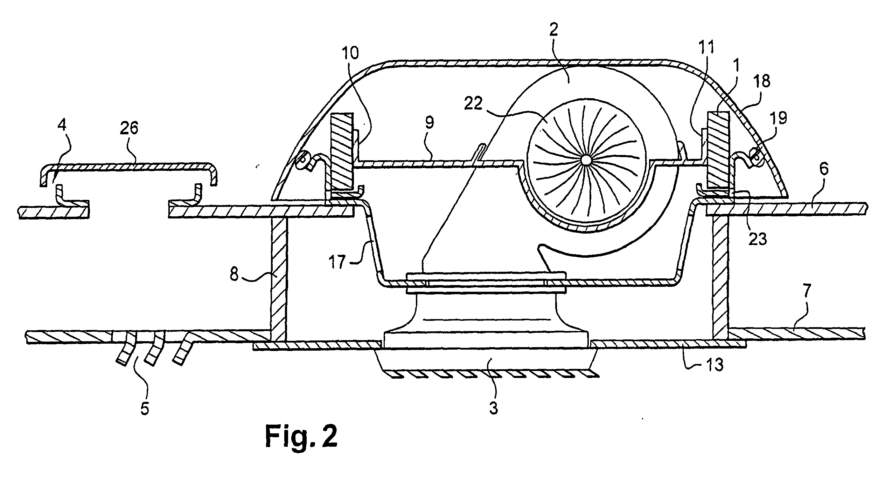

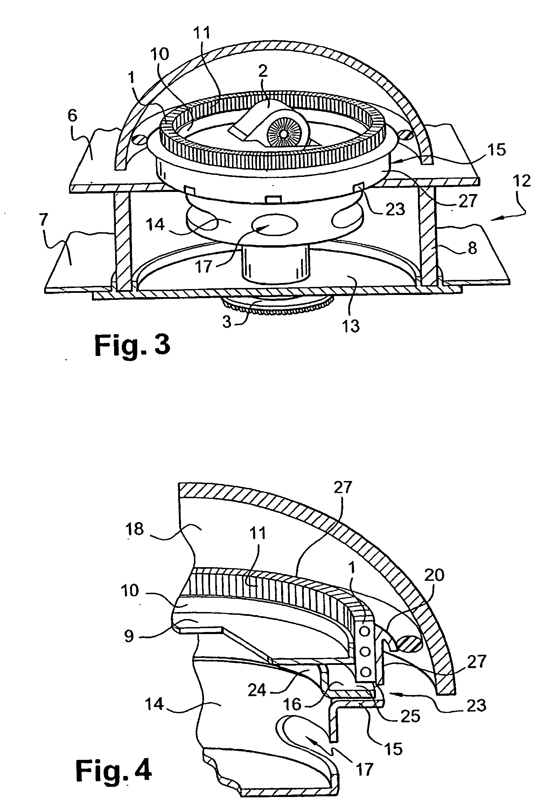

L'invention sera mieux comprise à la lecture de la description qui va suivre d'un exemple de réalisation non limitatif en référence aux figures qui représentent :
- En figure 1 :: une vue éclatée perspective de différents constituants d'un dispositif de ventilation et de climatisation selon l'invention ;
- En figure 2 :: une vue schématique en coupe d'un dispositif de ventilation et de climatisation selon l'invention ;
- En figure 3 :: Une vue en perspective coupe d'un bloc de ventilation et de climatisation d'un dispositif selon l'invention ;
- En figure 4 :: un détail en perspective coupe du bloc selon la figure 3 ;

Le dispositif de ventilation et de climatisation de véhicule schématisé en figure 2 comporte un évaporateur 1, une turbine 2 aspirant l'air au travers de l'évaporateur 1 pour le souffler vers un diffuseur 3 central selon l'exemple représenté.

L'évaporateur 1 est de manière connue, relié par des tubes 30, 31 à un groupe de réfrigération entraîné par le moteur du véhicule, par exemple tel que décrit dans le document FR 2 825 325 auquel il y a lieu de se référer. Un tel groupe comprend de manière traditionnelle un compresseur distribuant un fluide réfrigérant par des tubulures vers un ou plusieurs évaporateurs dans lesquels la détente du fluide cause un abaissement de la température.

Le dispositif de ventilation et de climatisation selon l'invention a son principe de fonctionnement décrit en figure 2. Le dispositif comporte un circuit d'air créé par une turbine, la turbine comportant une entrée d'aspiration de l'air aspirant l'air du côté d'un évaporateur et une sortie soufflant l'air au travers d'un diffuseur. La turbine peut être une turbine à vitesse constante ou à régulation de vitesse, la vitesse de la turbine étant par exemple dans ce cas commandée par un système de régulation automatisé.

En amont de la turbine, une première entrée 4 d'air extérieur est réalisée au niveau du toit du véhicule, cette entrée d'air pouvant être réglée par un dispositif de clapet 26. Une entrée 5 d'air intérieur est elle ménagée dans un élément de faux-plafond 7 qui peut soit être partie d'un faux plafond d'origine du véhicule ou un élément de faux plafond, éventuellement partiel, installé lors de la pose du dispositif de ventilation et de climatisation. L'entrée d'air peut notamment comporter des lamelles de guidage du flux d'air.

Sous l'action de la turbine 2, l'air intérieur et l'air extérieur, aspirés au travers de l'élément filtrant (ou filtre) 8, se mélangent en amont (par rapport au flux d'air) de cet élément filtrant 8 disposé en amont de l'évaporateur 1 lui même disposé en amont de la turbine.

L'évaporateur 1 plus particulièrement décrit en figure 1 est, selon l'exemple, un évaporateur annulaire torique. Afin de réaliser un dispositif compact, cet évaporateur 1 est disposé en périphérie de la turbine 2. Pour interdire un passage direct de l'air dans la turbine, une cloison 9 de séparation, sous forme d'un disque perpendiculaire à l'axe de l'évaporateur 1, est disposée autour de la turbine 2 et s'étend jusqu'à la face interne 11 de l'évaporateur. Cette cloison divise le volume délimité par la face cylindrique interne de l'évaporateur en créant une portion de volume supérieure et une portion de volume inférieure dans l'espace délimité par l'évaporateur. Ainsi la cloison 9 cause un passage forcé de l'air au travers de la section de l'évaporateur 1 en périphérie de cette cloison. Ainsi selon l'invention, l'air passe autour du disque formé par la cloison 9 et passe entre les lamelles de l'évaporateur pour être refroidi.

En particulier, un mode de réalisation préférentiel prévoit que les lamelles 27 de la partie active de l'évaporateur soient telles que leur hauteur dans l'axe de révolution de l'évaporateur soit supérieure à leur largeur (sens radial) ceci revenant à orienter la partie active de l'évaporateur dans le sens vertical, permettant ainsi à l'évaporateur d'offrir une grande surface active tout en restant de construction aisée.

Cette orientation verticale de l'évaporateur est associée à un forçage du passage de l'air dans l'évaporateur afin d'accroître l'efficacité du dispositif.

Pour ce faire, et afin d'augmenter la distance parcourue par l'air dans l'évaporateur en le canalisant dans l'évaporateur et augmenter l'efficacité du dispositif, la cloison 9 comporte avantageusement un rebord 10 périphérique, ce rebord étant mis en appui contre une face 11 interne de l'évaporateur 1. Ce rebord s'oppose ainsi à la sortie directe de l'air sur au moins une partie de la face 11 interne de l'évaporateur 1.

Il est à noter que le rebord 10 de la cloison 9 peut être prévu de hauteur non constante de façon à équilibrer les flux d'air dans le cas où la turbine 2 verticale est décentrée par rapport à l'évaporateur. La cloison peut par exemple être plus haute dans les zones proches de l'entrée d'air de la turbine que dans les zones lointaines de cette entrée d'air.

En figure 3 est plus particulièrement décrite la partie inférieure du dispositif. Pour une plus grande facilité de mise en oeuvre et pour permettre une bonne répartition du flux d'air entrant dans le dispositif, le filtre 8, avantageusement de forme annulaire, est disposé dans l'espace 12 délimité entre le toit 6 et le faux-plafond 7 du véhicule.

Selon cette figure le positionnement du dispositif par rapport au toit et au faux-plafond est représenté. Il est notamment visible sur cette figure que l'évaporateur 1 est disposé au dessus du toit du véhicule et donc disposé au moins partiellement au dessus d'un plan, constitué par le toit, délimitant le filtre 8 en partie supérieure.

Pour faciliter le remplacement du filtre, opération qui pour un autobus de transport urbain doit être faite environ toutes les deux semaines, le filtre est posé sur une plaque support 13 solidaire d'au moins une partie du diffuseur 3. Le diffuseur est par exemple fixé sous une casserole 14 portant la turbine 2, l'évaporateur 1 et la cloison 9. Pour démonter et changer le filtre il suffit de démonter le diffuseur 3, l'extraire par le bas du faux-plafond 7 du véhicule, la plaque support portant le filtre 8 étant ainsi démontée avec le diffuseur 3.

Dans l'optique d'une simplicité de montage éventuellement en post équipement d'un véhicule le dispositif de ventilation et de climatisation est réalisé de manière compacte et, pour garder un volume important à l'évaporateur 1, celui-ci est disposé dans un flasque 15 prolongeant vers le haut une casserole 14 de support de la turbine 2.

Le montage de ce sous ensemble est simple : la turbine est tout d'abord fixée dans la casserole 14, une couronne 16 de récupération d'eau de condensation est posée sur le flasque 15 débordant de la casserole 14, l'évaporateur est inséré entre les parois verticales du flasque, la couronne 16 est ainsi intercalée entre l'évaporateur 1 et le flasque 15, puis la cloison horizontale 9 est positionnée dans l'espace intérieur à l'évaporateur.

La couronne 16 est disposée sous l'évaporateur comme décrit par exemple dans la figure 4 qui représente un détail en crevé de la casserole 14 et d'une partie du flasque 15 qui comporte un bord horizontal et une paroi externe verticale 27 se terminant par un rebord extérieur 20. La partie inférieure de la paroi externe verticale 27 est percée de trous d 'évacuation d'eau 23 en regard de la couronne 16. La couronne 16 est munie d'une arête interne 24 s'opposant à l'entrée d'eau dans le dispositif et une surface plane ou légèrement inclinée vers l'extérieur 25 qui permet à l'eau de s'évacuer par les trous 23 réalisés dans le flasque.

On remarquera sur le détail de la figure 4 que l'évaporateur a une partie inférieure de sa face externe en appui contre la paroi verticale 27 du flasque 15. Ceci est notamment intéressant pour guider le flux d'air dans l'évaporateur.

Selon la figure 3, la casserole 14 sert de bâti pour le maintien de la turbine 2 et au travers du flasque 15 de l'évaporateur 1. Afin de permettre le passage de l'air dans la chambre constituée par l'espace inférieur à la cloison 9, la casserole 14 comprend des trous 17 de passage communiquant avec la zone délimitée par le filtre 8.

Ainsi, l'air entre dans une partie inférieure de la casserole 14, est dirigé par la cloison 9 dans une direction radiale centrifuge vers l'évaporateur 1, est canalisé à l'intérieur de l'évaporateur 9, son parcours dans l'évaporateur étant allongé par le rebord 10 prolongeant verticalement la cloison 9, et s'échappe au dessus du rebord 10 vers la turbine 2 selon une direction radiale centripète sous l'action de l'aspiration de la turbine 2. La turbine selon l'exemple est de type à entrée axiale 22 et soufflage radial et, afin de ne pas obturer partiellement l'entrée d'air de cette turbine tout en interdisant un passage d'air direct dans la partie inférieure délimitée par la cloison 9, cette dernière comporte une forme inférieure 21 en creux en regard de l'entrée de la turbine. Un dispositif conforme au principe de l'invention pourrait utiliser une turbine à soufflage axial disposée dans ce cas horizontalement, la cloison conservant son action de guidage du flux d'air dans l'épaisseur de l'évaporateur.

Comme vu précédemment, une partie du dispositif comprenant notamment le flasque 15 et l'évaporateur 1 est disposée au dessus du toit 6 du véhicule. Ainsi le flasque peut être posé sur le toit, la fixation du flasque sur le toit 6 réalisant la fixation du dispositif. Par contre, pour limiter les parties dépassant du toit, la casserole 14 est située dans l'espace entre le toit 6 et l'élément de faux-plafond 7 éventuellement rapporté avant la mise en place du dispositif, le diffuseur 3 central dépassant normalement du faux-plafond vers le bas. Cette disposition à l'avantage de limiter la découpe du toit nécessaire pour installer le dispositif à une découpe circulaire du toit, une telle découpe ne créant pas de zone de faiblesse dans ce toit.

Il y a évidemment lieu de confiner l'air tout au long de son parcours depuis la zone de mélange jusqu'au diffuseur. Notamment pour maintenir la zone d'aspiration entre l'évaporateur 1 et la turbine 2 étanche, le dispositif est avantageusement recouvert d'une cloche 18 de confinement. Pour interdire tout passage d'air direct de l'extérieur vers la turbine, un joint 19 d'étanchéité annulaire est disposé entre un rebord extérieur 20 du flasque 15 et la cloche 18 de confinement. Par contre un interstice de passage pour l'eau de condensation venant de la couronne gouttière 16 est prévu entre la cloche de confinement et le toit.

Eventuellement, il peut être prévu de garnir la partie inférieure du toit de matériaux d'isolation non représentés.

Ainsi le dispositif de ventilation et de climatisation est compact du fait du logement de l'évaporateur et de la turbine dans un bâti constitué par la casserole 14 et son flasque 15, peut être installé dans l'encombrement d'un dispositif de ventilation simple ou être monté en post équipement sur un autobus dépourvu de climatisation moyennant une simple découpe du toit et du faux plafond (ou installation d'un élément de faux plafond au moins dans une zone entourant le dispositif), l'installation d'un dispositif compresseur, de canalisations amenant le fluide réfrigérant à l'évaporateur et du câblage électrique pour la turbine.

De plus, le circuit d'air contraint dans l'évaporateur 1 offre au dispositif un bon rendement en regard de son encombrement.

Selon l'exemple représenté le dispositif a une forme générale de révolution, cette forme étant la plus adaptée pour simplifier les découpes dans le toit et le faux-plafond une autre forme (par exemple polygonale) des éléments tels que la casserole, le filtre, la cloison et l'évaporateur reste toutefois envisageable dans le cadre de l'invention.

## Revendications

1. Dispositif de ventilation et de climatisation, pouvant être monté sur un toit d'un véhicule, comportant un espace délimité entre le toit (6) et au moins un élément de faux-plafond (7) au dessous du toit, le dispositif comportant un évaporateur (1), au moins une entrée (4) d'air extérieur et une entrée (5) d'air intérieur ménagées respectivement dans le toit (6) du véhicule et dans l'élément de faux-plafond (7), étant adapté à aspirer de l'air intérieur et l'air extérieur mélangés dans l'espace délimité entre le toit et le faux-plafond en amont d'un élément filtrant (8) lui même disposé en amont de l'évaporateur (1), et une turbine (2) aspirant l'air au travers de l'évaporateur (1) pour le soufller vers un diffuseur (3), l'évaporateur (1) étant un évaporateur annulaire disposé en périphérie de la turbine (2), **caractérisé en ce qu'**il comporte une cloison (9) de séparation, perpendiculaire à l'axe de l'évaporateur (1), disposée autour de la turbine (2), divisant le volume délimité par la face cylindrique interne (11) de l'évaporateur en créant une portion de volume supérieure et une portion de volume inférieure dans l'espace délimité par l'évaporateur, causant ainsi un passage forcé de l'air au travers de la section de l'évaporateur (1), le passage forcé de l'air se faisant de la portion de volume inférieure vers la portion de volume supérieure.

2. Dispositif selon la revendication 1 **caractérisé en ce que** la cloison (9) comporte un rebord (10) périphérique, en appui contre une face (11) interne de l'évaporateur (1), s'opposant à la sortie de l'air sur au moins une partie de la face (11) interne de l'évaporateur (1).

3. Dispositif selon la revendication 2 **caractérisé en ce que** le rebord (10) de la cloison (9) est de hauteur non constante de façon à équilibrer les flux d'air dans le cas où la turbine (2) verticale est décentrée par rapport à l'évaporateur.

4. Dispositif selon l'une quelconque des revendications 1 à 3 **caractérisé en ce que** le filtre (8) est un filtre annulaire.

5. Dispositif selon l'une quelconque des revendications précédentes **caractérisé en ce que** le filtre (8) est disposé dans l'espace (12) délimité entre le toit (6) et le faux plafond (7) du véhicule et est positionné sur une plaque support (13) solidaire d'au moins une partie du diffuseur (3), le démontage du filtre (8) étant réalisé par le démontage du diffuseur (3) et son extraction par le bas du faux-plafond (7) du véhicule.

6. Dispositif selon l'une quelconque des revendications précédentes **caractérisé en ce que** l'évaporateur (1) est disposé dans un flasque (15) prolongeant vers le haut une casserole (14) de support de la turbine (2), la casserole (14) comprenant des trous (17) de passage pour l'air venant du filtre (8).

7. Dispositif selon la revendication 6 **caractérisé en ce qu'**une couronne annulaire (16) de récupération d'eau de condensation étant intercalée entre l'évaporateur (1) et le flasque (15), la couronne (16) évacuant l'eau de condensation à l'extérieur du véhicule par des trous (23) dans le flasque (15).

8. Dispositif selon la revendication 6 ou 7 **caractérisé en ce que** l'air entre dans une partie inférieure de la casserole (14), est dirigé dans une direction radiale centrifuge vers l'évaporateur (1) et s'échappe au dessus dudit rebord (10) vers la turbine (2) selon une direction radiale centripète sous l'action de l'aspiration de la turbine (2).

9. Dispositif selon l'une quelconque des revendications 6 à 8 **caractérisé en ce que** une partie du dispositif comprenant le flasque (15) et l'évaporateur (1) est adaptée à être disposée au dessus du toit (6) du véhicule et recouverte d'une cloche (18) de confinement, un joint (19) d'étanchéité annulaire étant disposé entre un rebord extérieur (20) du flasque (15) et la cloche (18) de confinement.

10. Dispositif selon l'une quelconque des revendications 6 à 9 **caractérisé en ce qu'**il est adapté à être fixé au toit (6) par le flasque (15), la casserole (14) étant alors située dans l'espace entre le toit (6) et le faux-plafond (7), le diffuseur (3) central faisant saillie au dessous du plafond.

11. Dispositif selon l'une des revendications précédentes **caractérisé en ce que** le diffuseur (3) est un diffuseur central.

## Patentansprüche

1. Belüftungs- und Klimatisierungsvorrichtung, die auf dem Dach eines Fahrzeugs angebracht werden kann, das einen begrenzten Raum zwischen dem Dach (6) und wenigstens einem Doppelbodenelement (7) unter dem Dach aufweist, wobei die Vorrichtung, die einen Verdampfer (1), wenigstens einen Einlass (4) für Außenluft und einen Einlass (5) für Innenluft, die im Dach (6) des Fahrzeugs bzw. im Doppelbodenelement (7) ausgebildet sind, aufweist, so beschaffen ist, dass sie Innenluft und Außenluft ansaugt, die in dem begrenzten Raum zwischen dem Dach und dem doppelten Boden auf der Einlassseite eines Filterelements (8) gemischt wird, das seinerseits auf der Einlassseite des Verdampfers (1) angeordnet ist, wobei die Vorrichtung eine Turbine (2) aufweist, die die Luft durch den Verdampfer (1) ansaugt, um sie zu einem Diffusor (3) zu blasen, und der Verdampfer (1) ein ringförmiger Verdampfer ist, der im Umfangsbereich der Turbine (2) angeordnet ist, **dadurch gekennzeichnet, dass** sie eine Trennwand (9) senkrecht zur Längsachse des Verdampfers (1) aufweist, die um die Turbine (2) angeordnet ist und das durch die zylindrische Innenfläche (11) des Verdampfers begrenzte Volumen unterteilt, indem in dem durch den Verdampfer begrenzten Raum ein oberer Volumenabschnitt und ein unterer Volumenabschnitt erzeugt werden, wodurch ein erzwungener Durchgang der Luft durch den Verdampferabschnitt (1) hervorgerufen wird, wobei der erzwungene Durchgang der Luft von dem unteren Volumenabschnitt zu dem oberen Volumenabschnitt erfolgt.

2. Vorrichtung nach Anspruch 1, **dadurch gekennzeichnet, dass** die Trennwand (9) einen Umfangsrand (10) aufweist, der an einer Innenfläche (11) des Verdampfers (1) anliegt und dem Luftauslass wenigstens an einem Teil der Innenfläche (11) des Verdampfers (1) gegenüberliegt.

3. Vorrichtung nach Anspruch 2, **dadurch gekennzeichnet, dass** der Rand (10) der Trennwand (9) eine nicht konstante Höhe besitzt, derart, dass die Luftströme in dem Fall, in dem die vertikale Turbine (2) in Bezug auf den Verdampfer dezentriert ist, ausgeglichen werden.

4. Vorrichtung nach einem der Ansprüche 1 bis 3, **dadurch gekennzeichnet, dass** der Filter (8) ein ringförmiger Filter ist.

5. Vorrichtung nach einem der vorhergehenden Ansprüche, **dadurch gekennzeichnet, dass** der Filter (8) in dem begrenzten Raum (12) zwischen dem Dach (6) und dem doppelten Boden (7) des Fahrzeugs angeordnet und auf einer Tragplatte (13) positioniert ist, die wenigstens mit einem Teil des Diffusors (3) fest verbunden ist, wobei die Demontage des Filters (8) durch die Demontage des Diffusors (3) und seine Entnahme durch die Unterseite des doppelten Bodens (7) des Fahrzeugs erfolgt.

6. Vorrichtung nach einem der vorhergehenden Ansprüche, **dadurch gekennzeichnet, dass** der Verdampfer (1) in einem Flansch (15) angeordnet ist, der eine Unterstützungspfanne (14) der Turbine (2) nach oben verlängert, wobei die Pfanne (14) Durchgangslöcher (17) für die vom Filter (8) kommende Luft aufweist.

7. Vorrichtung nach Anspruch 6, **dadurch gekennzeichnet, dass** zwischen den Verdampfer (1) und den Flansch (15) ein ringförmiger Kondensationswasser-Rückgewinnungskranz (16) eingefügt ist, der das Kondensationswasser durch Löcher (23) in dem Flansch (15) in die äußere Umgebung des Fahrzeugs abführt.

8. Vorrichtung nach Anspruch 6 oder 7, **dadurch gekennzeichnet, dass** die Luft in einen unteren Teil der Pfanne (14) eintritt, in einer radialen Zentrifugalrichtung zum Verdampfer (1) geleitet wird und oberhalb des Randes (10) in einer radialen Zentripetalrichtung unter der Saugwirkung der Turbine (2) zu der Turbine (2) entweicht.

9. Vorrichtung nach einem der Ansprüche 6 bis 8, **dadurch gekennzeichnet, dass** ein Teil der Vorrichtung, der den Flansch (15) und den Verdampfer (1) umfasst, so beschaffen ist, dass er auf dem Dach (6) des Fahrzeugs angeordnet und von einer Einschlusshaube (18) bedeckt ist, wobei zwischen dem äußeren Rand (20) des Flansches (15) und der Einschlusshaube (18) eine ringförmige Dichtung (19) angeordnet ist.

10. Vorrichtung nach einem der Ansprüche 6 bis 9, **dadurch gekennzeichnet, dass** sie so beschaffen ist, dass sie am Dach (6) durch einen Flansch (15) befestigt ist, wobei sich die Pfanne (14) dann in dem Raum zwischen dem Dach (6) und dem doppelten Boden (7) befindet, während der mittige Diffusor (3) unterhalb des Bodens vorsteht.

11. Vorrichtung nach einem der vorhergehenden Ansprüche, **dadurch gekennzeichnet, dass** der Diffusor (3) ein zentraler Diffusor ist.

## Claims

1. A ventilation and air conditioning device able to be mounted on the roof of a vehicle, comprising a space delimited between the roof (6) and at least one false-ceiling element (7) below the roof, the device comprising an evaporator (1), at least one external air inlet (4) and one internal air inlet (5) provided respectively in the roof (6) of the vehicle and in the false-ceiling element (7), being adapted to suck internal air and external air mixed in the space delimited between the roof and the false-ceiling upstream of a filtering element (8) itself disposed upstream of the evaporator (1), and a turbine (2) for sucking the air through the evaporator (1) in order to blow it to a diffuser (3), the evaporator (1) being an annular evaporator disposed at the periphery of the turbine (2), **characterised in that** it comprises a separation partition (9), perpendicular to the axis of the evaporator (1) disposed around the turbine (2), dividing the volume delimited by the internal cylindrical face (11) of the evaporator, creating an upper volume portion and a lower volume portion in the space delimited by the evaporator, thus causing a forced passage of air through the section of the evaporator (1), the forced passage of air taking place from the lower volume portion towards the upper volume portion.

2. A device according to claim 1, **characterised in that** the partition (9) comprises a peripheral rim (10), in abutment against an internal face (11) of the evaporator (1), opposing the discharge of air over at least part of the internal face (11) of the evaporator (1).

3. A device according to claim 2, **characterised in that** the rim (10) of the partition (9) has a non-constant height so as to balance the air flows in the case where the vertical turbine (2) is off-centre with respect to the evaporator.

4. A device according to any one of claims 1 to 3, **characterised in that** the filter (8) is an annular filter.

5. A device according to any one of the preceding claims, **characterised in that** the filter (8) is disposed in the space (12) delimited between the roof (6) and the false ceiling (7) of the vehicle and is positioned on a support plate (13) fixed to at least part of the diffuser (3), the removal of the filter (8) being effected by the removal of the diffuser (3) and its extraction through the bottom of the false-ceiling (7) of the vehicle.

6. A device according to any one of the preceding claims, **characterised in that** the evaporator (1) is disposed in a flange (15) extending upwards a pan (14) supporting the turbine (2), the pan (14) comprising passage holes (17) for the air coming from the filter (8).

7. A device according to claim 6, **characterised in that**, an annular ring (16) for recovering condensation water being interposed between the evaporator (1) and the flange (15), the ring (16) discharging the condensation water to the outside of the vehicle through holes (23) in the flange (15).

8. A device according to claim 6 or 7, **characterised in that** the air enters a lower part of the pan (14), is directed in a centrifugal radial direction towards the evaporator (1) and escapes above said rim (10) towards the turbine (2) in a centripetal radial direction under the suction action of the turbine (2).

9. A device according to any one of claims 6 to 8, **characterised in that** a part of the device comprising the flange (15) and the evaporator (1) is adapted to be disposed above the roof (6) of the vehicle and covered with a confinement bell (18), an annular seal (19) being disposed between an external rim (20) of the flange (15) and the confinement bell (18)..

10. A device according to any one of claims 6 to 9, **characterised in that** it is adapted to be fixed to the roof (6) by the flange (15), the pan (14) then being situated in the space between the roof (6) and the false-ceiling (7), the central diffuser (3) projecting below the ceiling.

11. Device according to one of the preceding claims, **characterised in that** the diffuser (3) is a central diffuser.
